# EUROPEAN PATENT APPLICATION

(11) **EP 3 111 756 A1**
(43) Date of publication of application: **04.01.2017**
(21) Application number: 16175485.8
(22) Date of filing: 21.06.2016
(51) Int. Cl.: A01K 1/01

(54) **URINAL PAD FOR PETS WITH ANNULAR INSTANT ABSORPTION LAYERS**

(30) Priority: 01.07.2015 CN 201520464367 U
(71) Applicant: Jiangsu Zhongheng Pet Articles Joint Stock Co., Ltd., Yangcheng City 224055 (CN)
(72) Inventor: Qiu, Bin, Yancheng City 224055 (CN)
(74) Representative: 2K Patentanwälte Blasberg Kewitz & Reichel

(57) **Abstract**

The present invention relates to a urinal pad for pets with annular instant absorption layers, belonging to the field of pet supplies. A urinal pad for pets with annular instant absorption layers comprises a urinal pad main body having a layered structure, wherein the urinal pad main body sequentially consists of a non-woven fabric coating layer (1) and an absorption layer (2) from top to bottom; and a plurality of concentric annular instant absorption layers (3) are raised on the absorption layer (2) at equal intervals. According to the urinal pad for pets disclosed by the present invention, the plurality of annular instant absorption layers disposed at equal intervals are raised on the absorption layer, and when there is no enough time to absorb more urine of pets, the annular instant absorption layer plays a layer-by-layer intercepting effect, and the urine of pets is limited on the absorption layer to prevent the urine of pets from being diffused along with the surface of the urinal pad.

## Description

### TECHNICAL FIELD

The present invention relates in general to pet supplies, and particularly relates to a urinal pad for pets with annular instant absorption layers.

### BACKGROUND ART

At present, with the improvement of people's living standards, pets, such as cats and dogs began to enter people's life and have been becoming more and more important. But in daily life, it treatment and disposal of excrements of pets is considerably troublesome, and owners need to spend considerable effort to solve this problem. In order to protect the environment, but also to make the habitation places of pets more comfortable, to meet the animal rights and demands of pets and simultaneously to reduce the tedious labor of people to clean pets, a considerable part of pets holders use urinal pads for pets while breeding pets. The existing urinal pad for pets comprises a non-woven fabric coating layer, an absorption layer formed by mixing wood pulp, PP fiber and super absorbent molecules is disposed under the non-woven fabric surface coating layer, and a bottom seepage-proof layer made of a PE film is disposed on the outer side surface of the absorption layer. The absorption layer of such urinal pad for pets is located in the center of the urinal pad for pets, so that urine will diffuse along with the surface of the urinal pad once there is not enough time to absorb more urine of pets, which finally results in seepage of pets urine.

### SUMMARY OF THE INVENTION

It is an object of the present invention to provide an enhanced urinal pad for pets suited to overcome the above drawbacks at least partially.

This problem is solved by a urinal pad for pets as claimed by claim 1. Further advantageous embodiments are the subject-matter of the dependent claims.

According to the present invention the urinal pad is provided with a plurality of annular instant absorption layers.

The purpose of the present invention is realized in such a manner

The urinal pad for pets with annular instant absorption layers is characterized by comprising a urinal pad main body having a layered structure, and the urinal pad main body sequentially consists of a non-woven fabric coating layer and an absorption layer from bottom to top; and a plurality of concentric annular instant absorption layers are raised on the absorption layer at equal intervals.

Wherein, the annular instant absorption layers are made of super absorbent resin.

According to the present invention, the water absorbing capacity of the annular instant absorption layers is higher than that of the absorption layer.

According to the present invention, the outer edge of the non-woven fabric coating layer is overlapped with that of the absorption layer.

The present invention has the beneficial effects that:
1) The plurality of annular instant absorption layers disposed at equal intervals are raised on the absorption layer, so that the annular instant absorption layers cause a layer-to-layer intercepting effect when there is not enough time to absorb more urine of pets, and the urine of pets is limited on the absorption layer to prevent the urine of pets from diffusing along with the surface of the urinal pad.
2) Only the annular instant absorption layers are raised on (protrude from) the absorption layer, so that the water absorbing capacity of the urinal pad can be improved, and the product cost will not be increased excessively.

### BRIEF DESCRIPTION OF THE DRAWINGS

- FIG.1: is a structural drawing of the present invention.
- FIG.2: is a sectional drawing of FIG.1 in an A-A direction.

### DETAILED DESCRIPTIONS OF THE PREFERRED EMBODIMENTS

The present invention will be further illustrated in the following in conjunction with specific exemplary embodiments and the attached drawings.

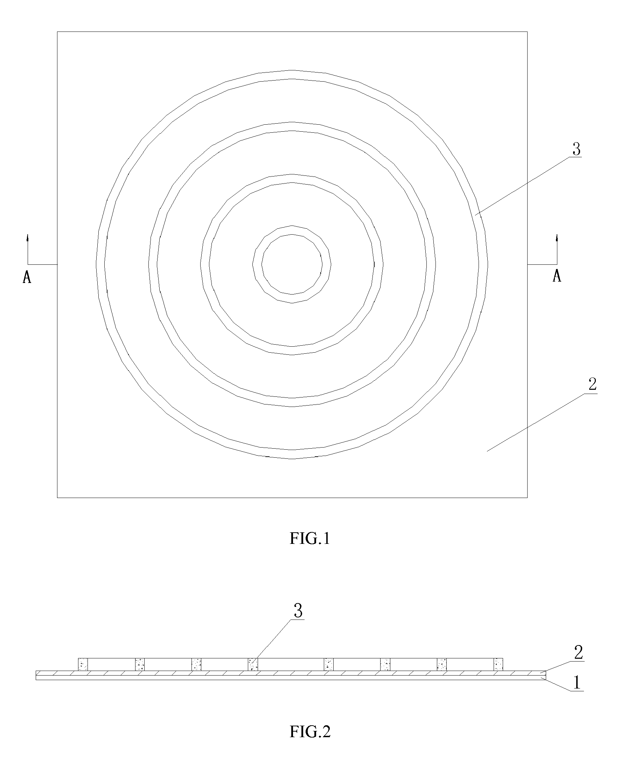

As shown in FIG.1 and in conjunction with FIG.2, a urinal pad for pets with annular instant absorption layers according to the present invention comprises a urinal pad main body having a layered structure. The urinal pad main body sequentially consists of a non-woven fabric coating layer 1 and an absorption layer 2 from bottom to top, wherein the outer edge of the non-woven fabric coating layer 1 is overlapped with that of the absorption layer 2. A plurality of concentric annular instant absorption layers 3 are raised on the upper surface of the absorption layer 2 at equal intervals. The water absorbing capacity of the annular instant absorption layers 3 is higher than that of the absorption layer 2, and the annular instant absorption layers 3 are specifically made of super absorbent resin. Such a structure can improve the water absorbing capacity of the urinal pad, and in contrast to using the super absorbent resin as substitute for the absorption layer, the use of the annular instant absorption layers 3 will not excessively increase the product cost.

During use, urine of pets is generally concentrated in the middle of the urinal pad, and when excessive urine of pets is accumulated, layers of annular instant absorption layers 3 will serve to rapidly absorb urine and also take the effect of stopping the urine of pets from diffusing; and the urine of pets is limited in the annular instant absorption layers 3 to effectively prevent the urine of pets from diffusing along the surface of the urinal pad so as to avoid seepage. Regarding the structure according to the present invention, only the plurality of instant absorption layers 3 are disposed on the upper side of the absorption layer 2, so that the product costs are increased only a little, but the water absorbing capacity of the urinal pad can be greatly improved.

## Claims

1. A urinal pad for pets with annular instant absorption layers, comprising a urinal pad main body with a layered structure, wherein the urinal pad main body sequentially consists of a non-woven fabric coating layer (1) and an absorption layer (2) from bottom to top; wherein a plurality of concentric annular instant absorption layers (3) are raised on the absorption layer (2) at equal intervals.

2. The urinal pad for pets according to claim 1, wherein the annular instant absorption layers (3) are made of super absorbent resin.

3. The urinal pad for pets according to claim 1 or 2, wherein the water absorbing capacity of the annular instant absorption layers (3) is higher than that of the absorption layer (2).

4. The urinal pad for pets with the annular instant absorption layers according to any of the preceding claims, wherein the outer edge of the non-woven fabric coating layer (1) is overlapped with that of the absorption layer (2).
